Europäisches Patentamt

European Patent Office

Office européen des brevets

(11) Publication number: **0 311 767**
**A2**

## (12) EUROPEAN PATENT APPLICATION

(21) Application number: **88112993.6**

(22) Date of filing: **10.08.88**

(51) Int. Cl.⁴: **G01D  9/40**

The title of the invention has been amended (Guidelines for Examination in the EPO, A-III, 7.3).

(30) Priority: **17.08.87 IT 4165887**

(43) Date of publication of application:
**19.04.89 Bulletin  89/16**

(84) Designated Contracting States:
**DE FR GB**

(71) Applicant: **EL.CON. S.r.L.**
**Via Liguria 4- Z.I.**
**I-35043 Monselice(IT)**

(72) Inventor: **Bergamin, Marino**
**Via S.Martino 19**
**I-35043 Monselice Padova(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Electromechanical writing pen actuators.**

(57) The electromechanical writing pen actuator comprises a carriage (4) slideable and oscillating on a guiding bar (5). The carriage (4) supports, orthogonally to the bar (5), rods (17) on which a penholder arm (24) is slideable. A movement system composed of step motors (2,3), pulleys (19,22,40,41,46,49,50) and flexible cables (12,20) causes movement of the pen on a cartesian plane. An electromagnet (45) is adapted to cause oscillation of the carriage and therefore the engagement and disengagement of the pen with and from the workplane.

Fig.1

EP 0 311 767 A2

# ELECTROMECHANICAL WRITING PEN ACTUATOR FOR PLOTTERS, ELECTRONICALLY CONTROLLED AUTOMATIC DRAWING AND WRITING DEVICES AND THE LIKE

The present invention relates to an electromechanical writing pen actuator for plotters, electronically controlled automatic drawing and writing devices and the like.

In the current art, the term "plotter" defines a particular apparatus, which has become widespread in very recent times in the automation of technical offices, graphic centers etc., and essentially consists of two parts: a power supply and a writing module.

The power supply, connectable to the electric mains or equipped with batteries, provides the writing module with the electrical power required for its operation.

The writing module, usable both autonomously and applied to the drafting machine of a drawing board, consists of an electronic control, actuation, storage and programming board which is the base of all the operations of the writing part and therefore has: a selection keyboard and a display for visualizing the operations which have been set; a container having an appropriate shape; and an electromechanical actuator which allows to support and move a writing pen, supplied with ink, according to the preset program.

The actuator device generally provides, for the movement, the use of two small electric motors, terms "step motors", which allow extremely high resolutions, and a complicated mechanical system of carriages, guides, belts, steel wires etc. which allows to convert the rotary motion of said motors into a rectilinear motion according to the positive-negative directions of the cartesian axes and such that the simultaneous combination of the two movements allows to execute any continuous or discontinuous graphic shape defined by an appropriately positioned writing pen.

An essential condition for a precise and perfectly repetitive graphic execution is the use of a mechanical device which converts the rotary motion of the step motors into a linear motion, free from coupling plays and at the same time without wear of the components.

The mechanical device must furthermore provide, with the same requirements, the lowering and the lifting of the pen.

Each manufacturer uses his own exclusive actuator device, the precision whereof characterizes the quality level of the apparatus.

Though they ensure high precision, known actuator devices require complicated constructive configurations such as to not always ensure, in the course of time, constancy of the original performance; they are furthermore characterized by high production costs and by considerable investments for their manufacture.

The aim of the present invention is to provide an electromechanical writing pen actuator for plotters, electronically controlled automatic drawing and writing devices and the line which ensures a high level of precision, which remains constant in the course of time, and is structurally simple and easy and rapid to assemble.

An important object of the present invention is to provide an actuator which, though it ensures high precision, uses low-cost and easily commercially available standard components.

A further object of the present invention is to provide an actuator device which is not restricted to rigid field sizes, allowing its use in larger or smaller devices by varying exclusively the quantity of standard components.

Still another object is to provide an actuator which uses writing ink pens but also thermal pens for normally marketed heat-sensitive papers.

Not least object is to have low costs obtainable with the current systems.

This aim, as well as these and other objects which will become apparent hereinafter, are achieved by an electromechanical writing pen actuator for plotters, electronically controlled automatic writing and drawing devices and the like which is characterized in that it comprises a carriage, slideable and oscillable on a guide bar, said carriage supporting, orthogonally to said bar, at least one rod on which a pen-holder arm is slideable, a flexible-cable advancement system obtaining the sliding, and electromagnetic means, associated with carriage rest rods, obtaining said oscillation and the engagement and disengagement of the pen with and from the workplane.

Further characteristics and advantages of the invention will become apparent from the detailed description of an embodiment thereof illustrated only by way of non-limitative example in the accompanying drawing, wherein:

figure 1 is a general schematic top plan view of the actuator according to the invention;

figure 2 is a schematic sectional end elevation view of the actuator taken along the line I-I of figure 1;

figure 3 is a general schematic front elevation view;

figure 4 is a schematic lateral detail view.

With reference to the above described figures, the electromechanical writing pen actuator for plotters, electronically controlled automatic writing and drawing devices and the like comprises a support 1 which may be made of any suitable rigid material and may have any dimensions and shape according to requirements, two step motors, respectively a first step motor 2 and a second step motor 3, and at least one electromagnet 45.

These parts are well known in the constructive art and therefore will be no further described herein.

Besides these known elements, the mechanical actuator according to the present invention comprises a carriage 4, slideably and rotatably coupled to a guide bar 5, supported at its ends by two columns 6 and 7 on which two knurled drums 8,9 are pivoted, a first drum 8 being idly rotatably mounted, a second drum 9 being keyed on a transmission shaft 10 rigidly associated, by means of a joint 11, with the output shaft of the first step motor 2.

Said second knurled drum 9, by means of a first flexible cable 12 made of metal or other material, pulls back and forth the carriage 4, the ends 13 and 14 of said cable 12 being attached to said carriage.

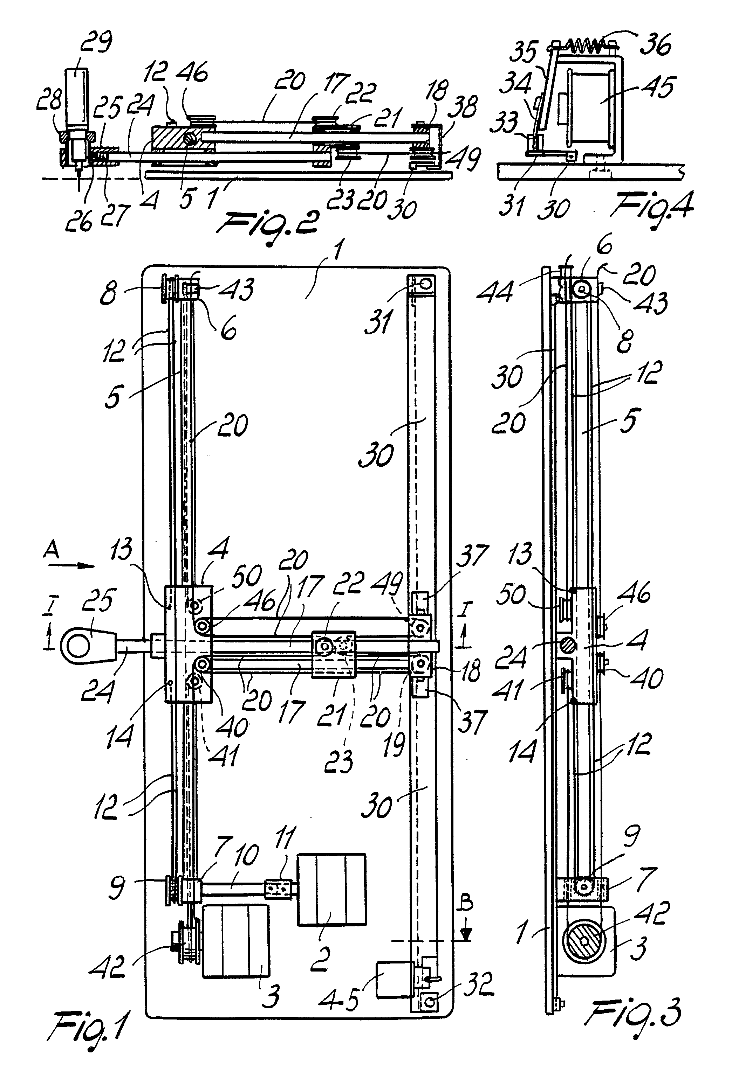

Said carriage 4 has, rigidly associated therewith, two mutually parallel guide rods 17, at the ends whereof a support member 18 is rigidly fixed and is provided with pulleys 19 and 49 for guiding a second cable 20, advantageously made of stranded steel, (see figure 1).

An auxiliary carriage 21 is slideably associated with the guide rods 17. Two coaxial pulleys 22 and 23 and a shaft 24 are slideable parallel to said rods 17 and guided by said carriage 4.

As illustrated in figure 2, said shaft 24 bears, fixed at its end opposite to said carriage 21, a support 25 with a ball 26 and a spring 27 for locking a ring 28 for the adjustment of a substantially upright writing pen 29.

The raising and lowering of the pen 29 is obtained by causing the carriage 4 to rotate on the guide 5 by raising and lowering the support 18, rigidly associated therewith, determined by the rotation of a rod 30 pivoted at its ends 31 and 32 and provided with a flap having formed therein a slot 33 within which a hook 34 is slideable and is in turn rigidly associated with a keeper 35 moved by the electromagnet 15 as illustrated in figure 4.

Two leaf springs 37 and fixed, for example by means of screws, at one of their ends, to the opposite longitudinal ends of said support 18 and act with the other end on said rod 30, pushing said support 18 upwards so that a lift limiter 38 retained by the rod 30 ensures the horizontal position of the system when the electromagnet 45 is not actuated.

Said carriage 4 furthermore has, upwardly pivoted, two pulleys with substantially vertical axes, respectively 40 and 46, which guide said cable 20 so that it winds on a movement drum 42 having a horizontal axis rigidly associated output shaft of the second step motor 3 and so that the ends of said cable are rigidly fixed in the column 6, one to a plate 43 and one to a spring-loaded cable tensioner 44.

Said carriage 4 furthermore has two pulleys, respectively 41 and 50, rotatable about substantially vertical axes, and adapted for guiding the end of the cable 20 which exits downwardly from the drum 42.

The operation of the electromechanical actuator according to the invention is as follows: the first step motor 2, controlled by an electronic apparatus, causes clockwise and anticlockwise rotation of the shaft 10 and therefore of the knurled drum 9 keyed thereon.

The drum 9 engages the cable 12 fixed, at its ends, to the carriage 4, which is thus moved back and forth in perfect synchronization with the first step motor 2.

The pen 29, mounted on a support 25 rigidly associated with the carriage 4, therefore performs the same movements as the carriage.

The second step motor 3 has, keyed on the shaft, the drum 42 on which the cable 20 is wound and, as illustrated in figure 1, is engaged and guided by the pulley 40, by the pulley 22, by the pulley 46 with the end existing upwardly from said drum and is then fixed to the column 6 by means of the plate 43.

The end of the cable 20 exiting downwardly from the drum 42 is engaged and guided by the pulleys 41, 19, 23, 49 and 50 and is then fixed to the column 6 by means of the spring-loaded cable tensioner 44.

The clockwise and anticlockwise rotation of the drum 42 allows the winding and unwinding of the cable 20, thus varying the distance between the pulleys 40, 46 pivoted on the carriage 4 and the pulley 22 pivoted on the auxialiary carriage 21.

The distance between the pulleys 19 and 49 and the movable pulley 23 varies in a strictly complementary manner.

The auxiliary carriage 21, and the pen-holder bar 24 with it, thus perform a back-and-forth movement orthogonally to the movement obtained with the first step motor 2 and with positions strictly linked to the winding and unwinding of the cable from the drum 42, the ends of said cable being fixed to the column 6.

The movement of the auxiliary carriage 21 is ensured regardless of the position of the carriage 4 since there is a rigid complementary relation between the cable which winds on and unwinds from the pulleys 22 and 23, rigidly associated with the auxiliary carriage 21.

The carriage 4, though it moves back and forth on the guide 5, does not interfere with the back-and-forth movement of the auxiliary carriage 21, thus allowing the writing pen 29 to assume, within the limits of the working field, any position resulting from the combination of the two movements of the carriage 4 and the carriage 21.

The movement of engagement and disengagement of the pen with and from the workplane is ensured by energizing and deenergizing the electromagnet 45, which by means of the keeper 35 and the hook 34 causes rotation of the rod 30 acting on the support 18 which, being rigidly associated with the carriage 4, causesit to rotate about the axis of the guide 5.

From what has been previously described, it is apparent that the invention achieves the intended aim and objects, since an electromechanical actuator has been provided which ensures a high precision in motion which in constant in time.

The actuator is furthermore characterized by a simple construction and is easy and rapid to assemble.

A hardly negligible advantage resides in the use of low-cost and easily available standard market components.

The invention thus conceived is susceptible to numerous modifications and variations, all of which are within the scope of the inventive concept.

Furthermore all the details may be replaced with other technically equivalent elements.

In practice, the materials employed, as well as the dimensions, may be any according to the requirements.

**Claims**

1. Electromechanical writing pen actuator for plotters, electronically controlled automatic writing and drawing devices and the like, characterized in that it comprises a carriage slideable and oscillating on a guide bar, said carriage supporting, orthogonally to said bar, at least one rod on which a pen-holder arm is slideable, a flexible-cable movement system obtaining the sliding and electromechanical means, associated with carriage rest rods , obtaining said oscillation and the engagement and disengagement of the pen with and from the workplane.

2. Electromechanical actuator according to claim 1, characterized in that said carriage rigidly supports the entire mechanism which allows said pen to assume any position in a cartesian plane within the work field.

3. Electromechanical actuator according to claim 1, characterized in that said pen-holder arm is rigidly associated with an auxiliary carriage slideable on said rods, its motion being independent from the movement of said carriage though it is comprised within a mechanism rigidly associated with said carriage.

4. Electromechanical actuator according to the preceding claims, characterized in that said guide bar is supported at the ends by two columns on which two knurled drums are pivoted, one whereof is free, the other one being keyed on a transmission shaft rigidly associated, by means of a joint, with the shaft of a first step motor.

5. Electromechanical actuator according to the preceding claims, characterized in that said knurled drum rigidly associated with said first step motor, by means of a flexible cable, moves back and forth said carriage on which the ends of said cable are fixed.

6. Electromechanical actuator according to the preceding claims, characterized in that said carriage bears, rigidly associated, two mutually parallel guide rods at the ends whereof there is rigidly fixed a support provided with guide pulleys for a cable, on said guide rods there being slideably associated said small carriage on which there are two coaxial pulleys and a shaft slideable parallel to said rods and guided by said carriage.

7. Electromechanical actuator according to the preceding claims, characterized in that said shaft provided on said small carriage bears, fixed to one of its ends, a support with ball and spring for locking an adjustment ring of said writing pen.

8. Electromechanical actuator according to the preceding claims, characterized in that said carriage has, upwardly pivoted, two pulleys which guide said cable so that it winds on a movement drum with a horizontal axis rigidly associated with the shaft of a second step motor and so that the ends of the cable are rigidly fixed to the opposite column, one of said ends being rigidly associated with a plate and one of said ends being fixed to a spring-loaded cable tensioner.

9. Electromechanical actuator according to the preceding claims, characterized in that said carriage has two pulleys, wherebetween said cable is guided, downwardly pivoted to it.

10. Electromechanical actuator according to the preceding claims, characterized in that it has a rotating rod pivoted at the ends and rigidly associated, by means of a support, with said carriage, said rotating rod having a flap with slots within which a hook is slideable which is in turn rigidly associated with a keeper moved by an electromagnet.

11. Electromechanical actuator according to the preceding claims, characterized in that two leaf springs are fixed at one of their ends to the opposite longitudinal ends of said support which connects said rod to said carriage, said springs acting on said rod and pushing said support upwards so that an elevation limiter, retained by said rod, ensures the horizontal position of the system with the electromagnet de-energized.

Fig.2

Fig.4

Fig.1

Fig.3